# EUROPÄISCHE PATENTSCHRIFT

(11) **EP 1 863 629 B1**
(45) Veröffentlichungstag und Bekanntmachung des Hinweises auf die Patenterteilung: **18.05.2011**
(21) Anmeldenummer: 06723253.8
(22) Anmeldetag: 07.03.2006
(51) Int. Cl.: B29C 70/78, B29C 67/24, B62D 29/04, B29K 75/00

(54) **VERFAHREN ZUR HERSTELLUNG VON FASERVERSTÄRKTEN VERBUNDTEILEN**
METHOD FOR PRODUCING FIBRE-REINFORCED COMPOSITE PARTS
PROCEDE DE PRODUCTION DE STRUCTURES COMPOSITES RENFORCEES PAR DES FIBRES

(30) Priorität: 19.03.2005 DE 102005012796
(43) Veröffentlichungstag der Anmeldung: 12.12.2007
(73) Patentinhaber: Bayer MaterialScience AG, 51368 Leverkusen (DE)
(72) Erfinder: KLEBA, Ingo, 53639 Koenigswinter (DE); BERGHAHN, Frank, 53639 Königswinter (DE); PETERSOHN, Andreas, 53773 Hennef (DE); WIRTZ, Hans-guido, 51377 Leverkusen (DE); FRANKEN, Klaus, 51467 Bergisch Gladbach (DE); MIES, Detlef, 50189 Esdorf (DE); SCHÜTZE, Marc, 44287 Dortmund (DE); WEGENER, Dirk, 40789 Monheim (DE)
(74) Vertreter: Weismantel, Lothar
(86) Internationale Anmeldenummer: PCT/EP2006/002053
(87) Internationale Veröffentlichungsnummer: WO 2006/099939

(56) Entgegenhaltungen:
- EP-A- 0 744 264
- EP-A- 1 331 164
- EP-A- 1 338 496
- EP-A- 1 346 902
- EP-A- 1 362 770
- EP-A- 1 362 771
- EP-A- 1 452 299
- EP-A- 1 459 881
- US-A- 4 822 549
- US-A- 5 360 885

## Beschreibung

Die Erfindung betrifft ein Verfahren zur Herstellung von Verbundteilen aus Faser verstärkten Kunststoffen mit einer Außenhaut aus einer Kunststoff- oder dünnen Metallfolie mit einer hohen optischen Oberflächenqualität (auch als Class-A-Oberfläche bezeichnet). Als Fasern kommen Glas-, Kohlenstoff-, Natur- oder Mineralfasern in Frage. Solche Verbundteile können z.B. in der Automobilindustrie als Dachmodule, Seitenteile, Kofferraumklappen und Motorhauben oder anderen Bauteilen mit hohen Ansprüchen an die Oberflächenqualität eingesetzt werden.

Die Problematik bei der Herstellung solcher Verbundbauteile mit hoher Oberflächenqualität liegt darin, dass Materialien mit unterschiedlichem thermischem Ausdehnungsverhalten bei erhöhten Temperaturen miteinander verbunden werden, so dass unvermeidbar nach dem Abkühlen thermische Spannungen in dem Verbundbauteil entstehen.

Diese thermischen Spannungen entstehen zum Einen innerhalb der Trägerschicht aufgrund der unterschiedlichen Schwindungen der Fasern und der umgebenden Polymermatrix, wodurch innerhalb einer faserverstärkten Schicht nach dem Abkühlen Texturen oder Wellen an der Oberfläche des Trägerteils entstehen können, die sich bis auf die Außenseite der Außenhaut durchzeichnen können (Abzeichnung). Zum Anderen führt der gleichzeitige Verbund einer solchen Faser verstärkten Schicht mit einer Außenhaut aufgrund unterschiedlicher Schwindungen zu thermischen Spannungen zwischen der Außenhaut und der Trägerschicht, wodurch es zu Verwindungen und zu Ablösungen der Außenhaut von der Trägerschicht kommen kann.

Ein weiteres Problem besteht darin, dass durch Lufteinschlüsse bedingte Bläschen unterhalb der Außenhaut die Oberflächenoptik negativ beeinflussen können.

In DE-A-10000767 wird vorgeschlagen, in der Faser verstärkten Schicht einen Schaumkern mit einer offenzelligen Schaumstruktur zu erzeugen. Dadurch sollen die durch den Temperatureinfluss bedingten Störungen an der Oberfläche beseitigt werden. Das Problem kann dadurch aber nur sehr bedingt gelöst werden. Die offenzellige Kernschicht begünstigt einerseits, dass das Gas in Lufteinschlüssen an der Folienoberfläche durch die offene Zellstruktur wegströmen kann. Außerdem kann es durch diese Maßnahme nicht mehr zu einer Schwindung bei Abkühlung der Polyurethan(PUR)-Schicht aufgrund des in den Zellen eingeschlossen Gases kommen. Andererseits können sich aber unterschiedliche Ausdehnungskoeffizienten der Trägerschicht und der Außenhaut nach wie vor negativ auswirken. Dadurch ist die Gefahr, dass es zu hohen Spannungen in der Grenzschicht kommt, weiter gegeben. Außerdem besteht dadurch insbesondere bei Inhomogenitäten in der Trägerschicht weiterhin die Gefahr, dass sich Wellen an der Oberfläche abbilden, die schon bei Vertiefungen/ Erhebungen der Wellen von wenigen Mikrometern das optische Erscheinungsbild der Oberfläche negativ beeinflussen.

Ergänzend wird in DE-A-10160374 vorgeschlagen, in der verstärkten Trägerschicht einen offenzelligen Polyurethanschaum einzusetzen, der bei geschlossener Form um einen Faktor 5 bis 20 verdichtet wird. Diese hohen Verdichtungsgrade sollen die Entlüftung der Formkavitäten verbessern und somit zu einer Reduzierung der Lufteinschlüsse an der Schaumfläche führen. Auch hier bestehen jedoch weiterhin die gleichen Probleme wie oben beschrieben. Die Problematik der unterschiedlichen thermischen Ausdehnung der Trägerschicht und der Außenhaut und die daraus resultierenden Probleme, insbesondere bei dem Ziel eine Class-A-Oberfläche zu gewährleisten, wird in dieser Schrift gar nicht erwähnt.

Die Problematik der thermischen Spannungen wird in einem etwas anderen Zusammenhang in DE-A-10161155 behandelt. Dort geht es ebenfalls um Verbundbauteile aus einer Außenhaut und einer Schicht aus Faser verstärktem Polyurethan, welche jedoch zusätzlich Einleger enthalten. Die Problematik dabei bestand darin, dass sich die Einlegerbauteile an der Oberfläche der Außenhaut nach dem Abkühlen abgezeichnet haben. Die erfindungsgemäße Lösung sieht eine Beschichtung des Einlegers mit einer Polymerschicht vor, wobei der thermische Ausdehnungskoeffizient bevorzugt im Bereich von +/- 30 *10⁻⁶ K⁻¹ im Vergleich zum thermischen Ausdehnungskoeffizienten der umgebenden Trägerschicht liegt. Aber auch dadurch wird lediglich die zusätzliche Problematik des negativen Einflusses der Einlegerteile reduziert und die grundsätzliche Problematik aufgrund der unterschiedlichen thermischen Ausdehnungskoeffizienten der Faser verstärkten Trägerschicht und der Außenhaut bleibt bestehen.

In EP-A-1334878 wird vorgeschlagen, als Material für die Außenhaut ebenfalls Polyurethan zu wählen um so die thermischen Spannungen zwischen Außenhaut und Trägerschicht zu vermeiden. Da die Trägerschicht jedoch Glasfasern enthält, kann auch diese Maßnahme das Problem nicht lösen. Eine Trägerschicht, die z.B. Glasfasern enthält, hat insgesamt ein völlig anderes thermisches Ausdehnungsverhalten als eine Schicht, die keine Glasfasern enthält, auch wenn die Polymermatrix in der Trägerschicht aus dem gleichen Material besteht wie die Außenhaut.

Ein Ansatz zur Lösung des Problems liegt in einer geeigneten Zwischenschicht, welche zwischen der Trägerschicht und der Außenhaut liegt. Das Einbringen einer Zwischenschicht bei Verbundbauteilen ist grundsätzlich bereits seit langem bekannt. So beschreibt die Offenlegungsschrift DE-A-3712926 ein Verbundteil, bei dem auf die Außenhaut zunächst eine Schicht aus PUR-Schaum aufgetragen wird, wobei dann auf diese Schicht eine Schicht aus Fasern und PUR-Gemisch aufgetragen wird. Das Einbringen einer derartigen Zwischenschicht wird ebenso in den Anmeldungen EP-A-1338496, EP-A-1362770 und EP-A-1459881 vorgeschlagen. EP-A-1338496 schlägt als Alternativen für diese Sperrschicht offenzelligen Schaum oder aber einen weichen, extrem dünnen Lack vor. Nachteilig ist dabei, dass eine Schaumschicht verhältnismäßig leicht komprimiert werden kann, wodurch sich die Außenhaut lokal eindrücken lassen kann.

In EP-A-1362770 werden alternativ Sperrschichten in Form eines PU-Coatings (z.B. 0,5 mm dick), als spritzgegossene, thermoplastische Kunststoffschicht (0,2 bis 1mm dick) oder aber aus Aluminiumfolie erwähnt. Dabei soll insbesondere die Aluminiumfolie dem so genannten Bimetalleffekt, welcher zu Verformungen von Verbundbauteilen bei thermischer Belastung aufgrund der unterschiedlichen Ausdehnungskoeffizienten führen kann, entgegen wirken. Da der Ausdehnungskoeffizient des Aluminiums jedoch sehr nah an dem der Trägerschicht liegt und deutlich unterhalb dem einer Thermoplastfolie, erscheint dies fraglich. Ebenso verhindert eine thermoplastische Kunststoffschicht als Sperrschicht zwar den direkten Kontakt der Fasern mit der Außenhaut, eine Verminderung des erwähnten Bimetall-Effektes ist aber allenfalls aufgrund der leicht erhöhten Steifigkeit gegeben.

Somit ist das Problem, eine geeignete Zwischenschicht bereit zu stellen, die die an sie gestellten Forderungen zuverlässig erfüllt, bislang ungelöst. Die erwähnten Zwischenschichten erscheinen entweder ungeeignet oder sie sind so unpräzise beschrieben, dass es dem Fachmann nicht möglich ist, ausgehend vom dem offenbarten Stand der Technik Teile mit einer optisch einwandfreien Oberfläche herzustellen.

Deshalb sollen zunächst noch einmal die Aufgaben, die an eine solche Zwischenschicht gestellt werden, detailliert beschrieben werden:

Die Aufgabe dieser Zwischenschicht besteht darin, die aus dem unterschiedlichen Ausdehnungsverhalten der Außenhaut und der Trägerschicht resultierenden Spannungen so aufzunehmen, dass einerseits die mechanische Festigkeit des Verbundes und andererseits die hohe optische Qualität der Außenhaut auch bei mechanischen und thermischen Wechselbeanspruchungen dauerhaft erhalten bleibt.

Die Zwischenschicht muss insbesondere auch die Unebenheiten, die an der Oberfläche der Trägerschicht durch die unterschiedlichen Schwindungen der Fasern und der Polymermatrix entstehen, zuverlässig wegpuffern können.

Außerdem muss die Zwischenschicht verhindern, dass sich das Verbundteil aufgrund der unterschiedlichen Schwindung der Außenhaut gegenüber der Trägerschicht verbiegt oder z.B. aufgrund der stets etwas inhomogenen Verteilung der Fasern Wellen aufwirft.

Zudem sollte die Zwischenschicht in der Lage sein, Oberflächenfehler infolge von Lufteinschlüssen im Faser verstärkten Trägerbauteil, welche sich u.a. bei Temperaturwechselbeanspruchungen bemerkbar machen, abzufangen, um ein gutes optisches Erscheinungsbild zu erreichen.

Eine weitere Funktion der Zwischenschicht besteht darin, z. B. bei Verwendung von thermoplastischen Außenhäuten Oberflächenfehler durch in der Außenhaut eingefrorene, innere Spannungen, die z.B. aus dem Herstellungsprozess oder nachgelagerten Umformprozessen resultieren können, zu vermeiden. Solche inneren Spannungen können bei der Weiterverarbeitung zum fertigen Verbundbauteil z.B. aufgrund erhöhter Temperaturen zum sogenannten Memory-Effekt führen, welcher eine lokale Schwindung verursacht Die Zwischenschicht muss folglich in der Lage sein, die daraus resultierenden Verschiebungen aufzunehmen, so dass es zu keiner Wellenbildung oder ähnlichen Oberflächendefekten kommt. In diesem Fall könnten auch thermoplastische Außenhäute minderer Qualität verwendet werden.

Die Aufgabe der vorliegenden Erfindung besteht daher darin, ein Verfahren zur Herstellung von Verbundteilen aus Faser verstärkten Kunststoffen mit einer äußeren Folie (Außenhaut) aus einer Kunststoff- oder dünnen Metallfolie mit einer hohen optischen Oberflächenqualität bereit zu stellen, bei der einerseits die mechanische Festigkeit des Verbundes und andererseits die hohe optische Qualität der äußeren Folie auch bei mechanischen und thermischen Wechselbeanspruchungen dauerhaft erhalten bleibt.

Die Erfindung nach Anspruch 1 betrifft ein Verfahren zur Herstellung von faserverstärkten Verbundbauteilen, bei dem eine äußere Folie mit einer Schicht enthaltend faserverstärktes Polyurethan verbunden wird. Nach diesem Verfahren wird
a) auf die äußere Folie, welche eine Dicke im Bereich von 0,2 mm bis 5 mm aufweist, zunächst eine elastische Zwischenschicht aufgebracht, welche einen Elastizitätsmodul von 0,5 MPa bis 50 MPa und eine Dicke von 0,3 mm bis 6 mm aufweist, und anschließend
b) auf die Rückseite der Zwischenschicht mindestens eine weitere Schicht aufgetragen, wobei mindestens eine Schicht enthaltend faserverstärktes Polyurethan aufgetragen wird.

Als äußere Folien werden z.B. coextrudierte Folien mit einer Trägerschicht aus Polycarbonat oder ABS (Acrylnitril-Butadien-Styrol) und einer Oberflächenschicht aus PMMA (Polymethylmethacrylat) eingesetzt. Möglich sind aber auch Monofolien aus ABS. Die äußere Folie kann aber auch aus einer anderen Kunststoff- oder einer Metallfolie bestehen. Die Dicke dieser Folien liegt im Bereich von 0,2 mm bis 5 mm, bevorzugt von 0,3 mm bis 3 mm und besonders bevorzugt von 0,5 mm bis 2 mm. Sie besitzen bevorzugt einen Elastizitätsmodul oberhalb von 800 MPa, bevorzugt von 1000 MPa bis 100000 MPa so dass ihre Eigensteifigkeit für eine Grundstabilität sorgt, die den Kräften, welche die Zwischenschicht durch ihre elastische Verformung ausüben kann, entgegenwirkt Für Innenanwendungen können aber auch z.B. Folien aus Weich-PVC (Polyvinylchlorid) eingesetzt werden.

Die Zwischenschicht ist so gestaltet, dass die maximalen Spannungen in den Grenzschichten infolge der unterschiedlichen Längenänderungen aufgrund der thermischen Schwindung beim Abkühlen und/oder des Reaktionsschwundes sowie der Ausdehnung von Lufteinschlüssen und der lokalen Längenänderungen in der Folie infolge des Memory-Effektes so niedrig sind, dass die Eigensteifigkeit der Folie verhindert, dass Wellen oder andere wahrnehmbare Inhomogenitäten an der Oberfläche entstehen können. Außerdem sind die Spannungen so niedrig, dass es weder an der Grenzfläche zwischen Außenhaut und Zwischenschicht noch an der Grenzfläche von Trägerschicht zu Zwischenschicht zu lokalen Ablösungen kommen kann. Daher weist die Zwischenschicht einen Elastizitätsmodul von 0,5 MPa bis 50 MPa, bevorzugt von 1 MPa bis 10 MPa und besonders bevorzugt von 2 MPa bis 5 MPa auf.

Die Zwischenschicht darf außerdem nicht zu dünn sein, da sonst auch sehr elastische Materialien die Spannungen nicht mehr zur Genüge abbauen können. Sie sollte aber auch nicht zu dick sein, da sonst die hydrostatische Versteifung nicht mehr ausreichend wirkt und der gesamte Verbund zu weich werden könnte. Es existiert somit eine optimale Dicke der Zwischenschicht. Die Zwischenschicht weist daher eine Dicke von 0,3 mm bis 6 mm, bevorzugt von 1 mm bis 4 mm, besonders bevorzugt von 1,5 mm bis 3 mm auf.

Es ist auch möglich für die Zwischenschicht ein viskoelastisches Material einzusetzen, welches in der Lage ist, Spannungen abzubauen und dennoch eine genügende Festigkeit bietet um die Schichten dauerhaft zu verbinden.

Bei Verwendung einer sehr elastischen Zwischenschicht mit den beschriebenen geringen Werten für den Elastizitätsmodul besteht die Gefahr, dass die äußere Folie bei hohen lokalen Belastungen punktuell spürbar eingedrückt (unerwünschter Softtouch-Effekt) oder sogar überdehnt werden kann. Diese Gefahr besteht insbesondere dann, wenn die Zwischenschicht aufgrund ihrer Kompressibilität möglicherweise eine spürbare Eindrückung der äußeren Folie zulässt, bevor die Steifigkeit der Trägerschicht wirksam werden kann.

Daher ist es wichtig, dass die Zwischenschicht aus einem möglichst inkompressiblen Material besteht. Denn wenn die äußere Folie lokal eingedrückt wird, muss die inkompressible Zwischenschicht verdrängt werden, wodurch eine zusätzliche hydrostatische Steifigkeit entsteht.

Dieses Materialverhalten wird durch den Kompressionsmodul der Zwischenschicht beschrieben, der bevorzugt zwischen 500 MPa und 5000 MPa liegen sollte, bevorzugt bei etwa 1000 MPa bis 2500 MPa und ganz besonders bevorzugt bei etwa 1200 MPa bis 2000 MPa.

Um eine dünne und gleichmäßige Zwischenschicht zu erzeugen, wird diese bevorzugt durch Sprühen auf die äußere Folie aufgetragen. Dabei hat sich gezeigt, dass die Eigenschaften der Zwischenschicht optimal wirken können, wenn mit dem Sprühauftrag bevorzugt eine gleichmäßige Masseverteilung mit weniger als + / - 10% Abweichung, besonders bevorzugt weniger als + / - 5% Abweichung der Masse der Zwischenschicht bezogen auf Flächenelemente von 5 cm² erfolgt, d.h. dass das Gewicht der Zwischenschicht beliebiger Flächenelemente um weniger als + / - 10% bzw. + / - 5% voneinander abweicht.

Zur Verbesserung der Haftung zwischen Zwischenschicht und der mindestens einen anschließend aufgebrachten weiteren Schicht, z.B. einer Trägerschicht oder einem Substrat, hat sich gezeigt, dass es vorteilhaft ist, dass das Aufbringen der weiteren Schicht oder Trägerschicht vor Ablauf der vollständigen Abbindezeit der Zwischenschicht erfolgt.

Gegenstand der Erfindung nach Anspruch 7 ist ein Verbundteil, enthaltend eine äußere Folie, eine Zwischenschicht und mindestens eine weitere Schicht, wobei mindestens eine der weiteren Schichten faserverstärktes Polyurethan enthält, worin
1) die äußere Folie eine Dicke im Bereich von 0,2 mm bis 5 mm aufweist, und
2) die elastische Zwischenschicht einen Elastizitätsmodul von 0,5 MPa bis 50 MPa und eine Dicke von 0,3 mm bis 6 mm aufweist, wobei die elastische Zwischenschicht wenigstens ein Polyurethanelastomer enthält, welches erhältlich ist durch Umsetzung von
   a) organischen Di- und/oder Polyisocyanaten mit
   b) mindestens einem Polyetherpolyol mit einem zahlenmittleren Molekulargewicht von 800 g/Mol bis 25 000 g/mol, bevorzugt von 800 bis 14 000 g/Mol, besonders bevorzugt 1000 bis 8000 g/mol und mit einer mittleren Funktionalität von 2,4 bis 8, besonders bevorzugt von 2,5 bis 3,5, und
   c) gegebenenfalls weiteren von b) verschiedenen Polyetherpolyolen mit einem zahlenmittleren Molekulargewicht von 800 g/Mol bis 25 000 g/Mol bevorzugt von 800 bis 14 000 g/Mol, besonders bevorzugt 1000 bis 8000 g/mol und mit mittleren Funktionalitäten, von 1,6 bis 2,4, bevorzugt von 1,8 bis 2,4 und
   d) Polymerpolyolen mit Gehalten von 1 bis 50 Gew.-% an Füllstoffen bezogen auf das Polymerpolyol, und mit OH-Zahlen von 10 bis 149 und mittleren Funktionalitäten von 1,8 bis 8, bevorzugt von 1,8 bis 3,5, und
   e) gegebenenfalls Kettenverlängerern mit mittleren Funktionalitäten von 1,8 bis 2, 1, vorzugsweise 2, und mit Molekulargewichten von 750 g/mol und kleiner, bevorzugt von 18 g/mol bis 400 g/mol, besonders bevorzugt von 60 g/mol bis 300 g/mol und/oder Vernetzern mit mittleren Funktionalitäten von 3 bis 4, vorzugsweise 3, und mit Molekulargewichten bis zu 750 g/Mol, bevorzugt von 18 g/Mol bis 400 g/Mol, besonders bevorzugt von 30 g/Mol bis 300 g/Mol,
   f) in Gegenwart von Aminkatalysatoren und
   g) Metallkatalysatoren und
   h) gegebenenfalls Zusatzstoffen.

Die erfindungsgemäßen Verbundteile können durch das erfindungsgemäße Verfahren erhalten werden.

Bevorzugt werden die Polyurethan-Elastomere (PUR-Elastomere), welche in der Zwischenschicht enthalten sind bzw. aus denen die Zwischenschicht besteht, nach dem Prepolymer-Verfahren hergestellt, wobei zweckmäßigerweise im ersten Schritt aus zumindest einem Teil des Polyetherpolyols b) oder dessen Mischung mit Polyolkomponente c) und / oder d) und mindestens einem Di- oder Polyisocyanat a) ein Isocyanatgruppen aufweisendes Polyadditionsaddukt hergestellt wird. Im zweiten Schritt können massive PUR-Elastomere aus derartigen Isocyanatgruppen aufweisenden Prepolymeren durch Umsetzung mit niedermolekularen Kettenverlängerern und/oder Vernetzern e) und/oder dem restlichen Teil der Polyolkomponenten b) und gegebenenfalls c) und / oder d) hergestellt werden. Werden im zweiten Schritt Wasser oder andere Treibmittel, oder Mischungen daraus mitverwendet, können mikrozellulare PUR-Elastomere hergestellt werden, wobei deren Kompressionsmodul ebenfalls zwischen 500 und 5000 MPa liegen soll.

Als Ausgangskomponente a) für das erfindungsgemäße Verfahren eignen sich aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden. Beispiele sind solche der Formel

Q (NCO)ₙ

in der n = 2, 3 oder 4, vorzugsweise 2 oder 3, besonders bevorzugt 2 bedeutet, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen, bedeuten. Bevorzugt sind Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan, 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenylmethan-diisocyanat, 1,3- und 1,4-Phenylendiisocyanat, 1,4-Duroldiisocyanat (DDI), 4,4'-Stilbendiisocyanat, 3,3'-Dimethyl-4,4'-biphenylendiisocyanat (TODI) 2,4- und 2,6-Toluylendiisocyanat (TDI) sowie beliebige Gemische dieser Isomeren, Diphenylmethan-2,4'- und/oder -4,4'-diisocyanat (MDI), oder Naphthylen-1,5-diisocyanat (NDI) geeignet.

Ferner kommen beispielsweise in Frage: Triphenylmethan-4,4',4"-triisocyanat, Polyphenyl-polymethylen-polyisocyanate, wie sie durch Kondensation von Anilin mit Formaldehyd und anschließende Phosgenierung erhalten und z.B. in GB-A 874 430 und GB-A 848 671 beschrieben werden, m- und p-Isocyanatophenylsulfonylisocyanate gemäß US-PS 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, DE-A 25 37 685 und DE-A 25 52 350 beschrieben werden, Norbornan-diisocyanate gemäß US-A 3 492 301, Allophanatgruppen aufweisende Polyisocyanate, wie sie in GB-A 994 890, BE-A 761 626 und NL-A 7 102 524 beschrieben werden, Isocyanuratgruppen aufweisende Polyisocyanate, wie sie in US-A 3 001 9731, in DE-A 10 22 789, DE-A 12 22 067 und DE-A 1 027 394 sowie in DE-A 1 929 034 und DE-A 2 004 048 beschrieben werden, Urethangruppen aufweisende Polyisocyanate, wie sie z.B. in der BE-A 752 261 oder in US-A 3 394 164 und DE-A 3 644 457 beschrieben werden, acylierte Harnstoff-gruppen aufweisende Polyisocyanate gemäß DE-A 1 230 778, Biuretgruppen aufweisende Polyisocyanate, wie sie in US-A 3 124 605, US-A 3 201 372 und US-A 3 124 605 sowie in GB-A 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-A 965 474 und GB-A 1 072 956, in US-A 3 567 763 und in DE-A 12 31 688 genannt werden, Umsetzungsprodukte der obengenannten Isocyanate mit Acetalen gemäß DE-A 1072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die 2,4- und 2,6-Toluylendiisocyanat sowie beliebige Gemische dieser Isomeren ("TDI"), 4,4'-Diphenylmethandiisocyanat, 2,4'-Diphenylmethandiisocyanat, 2,2'-Diphenylmethandiisocyanat und Polyphenyl-polymethylen-polyisocyanate, die durch Kondensation von Anilin mit Formaldehyd- und anschließende Phosgenierung hergestellt werden ("rohes MDI"), und Carbodiimidgruppen, Uretonimingruppen, Urethangrupppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Besonders bevorzugt werden im erfindungsgemäßen Verfahren Isocyanatgruppen aufweisende Prepolymere verwendet, die hergestellt werden durch Umsetzung mindestens einer Teilmenge der Polyolkomponente b) oder b) und c) und gegebenenfalls Kettenverlängerer und/oder Vernetzer e) mit mindestens einem aromatischen Diisocyanat aus der Gruppe TDI, MDI, TODI, DIBDI, NDI, DDI, vorzugsweise mit 4,4'-MDI und/oder 2,4-TDI und/oder 1,5-NDI zu einem Urethangruppen und Isocyanatgruppen aufweisenden Polyadditionsprodukt mit einem NCO-Gehalt von 6 bis 25 Gew.-%, vorzugsweise von 8 bis 20 Gew.-%.

Wie bereits oben ausgeführt wurde, können zur Herstellung der isocyanatgruppenhaltigen Prepolymeren Mischungen aus b), c), d) und e) verwendet werden. Nach einer bevorzugt angewandten Ausführungsform werden die Isocyanatgruppen enthaltenden Prepolymere jedoch ohne Kettenverlängerer bzw. Vernetzer e) hergestellt.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und die Katalysatoren der Reaktionsmischung erst zur Herstellung der PUR-Elastomere zuzugeben.

Geeignete Polyetherpolyole b) oder c) für die Herstellung der erfindungsgemäßen Elastomere können nach bekannten Verfahren hergestellt werden, beispielsweise durch Polyinsertion über die DMC-Katalyse von Alkylenoxiden, durch anionische Polymerisation von Alkylenoxiden in Gegenwart von Alkalihydroxiden oder Alkalialkoholaten als Katalysatoren und unter Zusatz mindestens eines Startermoleküls, das 2 bis 6, bevorzugt 2 bis 4 reaktive Wasserstoffatome gebunden enthält, oder durch kationische Polymerisation von Alkylenoxiden in Gegenwart von Lewis-Säuren wie Antimonpentachlorid oder Borfluorid-Etherat. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid, vorzugsweise werden Ethylenoxid und/oder 1,2-Propylenoxid eingesetzt. Die Alkylenoxide können einzeln, alternierend nacheinander oder als Mischungen verwendet werden. Bevorzugt werden Mischungen aus 1,2-Propylenoxid und Ethylenoxid eingesetzt, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. Als Startermolekül kommen Wasser oder 2- und 3-wertige Alkohole in Betracht, wie beispielsweise Ethylenglykol, 1,2-Propandiol und 1,3-Propandiol, Diethylenglykol, Dipropylenglykol, Ethandiol-1,4, Glycerin, Trimethylolpropan.

Geeignete Polyetherpolyole, vorzugsweise Polyoxypropylen-polyoxyethylen-polyole, besitzen mittlere Funktionalitäten von 2,4 bis 8, besonders bevorzugt von 2,5 bis 3,5 (für Polyetherpolyole b)) bzw. mittlere Funktionalitäten von 1,6 bis 2,4, bevorzugt 1,8 bis 2,4 (für Polyetherpolyole c)) und zahlenmittlere Molekulargewichte von 800 g/Mol bis 25 000 g/Mol, bevorzugt von 800 bis 14 000 g/Mol, besonders bevorzugt von 1 000 bis 8 000 g/Mol (für Polyetherpolyole b) und c)).

Als Polymerpolyole d) eignen sich außer den o.g. Polyetherpolyolen auch polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, hergestellt werden, sowie Polyetherpolyol-Dispersionen, die als disperse Phase - üblicherweise in Mengen von 1 bis 50 Gew.-%, vorzugsweise 1 bis 45 Gew.-% bezogen auf den Polyether - z.B. anorganische Füllstoffe, Polyharnstoffe (PHD), Polyhydrazide, tert.-Aminogruppen gebunden enthaltende Polyurethane und/oder Melamin enthalten.

Bevorzugt werden bei der Herstellung der erfindungsgemäßen Elastomere di- und trifunktionelle Polyetherpolyole mit einem zahlenmittleren Molekulargewicht von 800 bis 25 000, vorzugsweise von 800 bis 14 000 g/Mol, besonders bevorzugt von 1 000 bis 8000 g/Mol als Komponenten b) oder c) eingesetzt.

Zur Herstellung der erfindungsgemäßen PUR-Elastomeren können zusätzlich als Komponente e) niedermolekulare difunktionelle Kettenverlängerer, tri- oder tetrafunktionelle Vernetzer oder Mischungen aus Kettenverlängerern und Vernetzern verwendet werden.

Derartige Kettenverlängerer und Vernetzer e) werden zur Modifizierung der mechanischen Eigenschaften, insbesondere der Härte der PUR-Elastomeren eingesetzt. Geeignete Kettenverlängerer wie Alkandiole, Dialkylenglykole und Polyalkylen-polyole und Vernetzungsmittel, wie z.B. 3-oder 4-wertige Alkohole und oligomere Polyalkylen-polyole mit einer Funktionalität von 3 bis 4, besitzen üblicherweise Molekulargewichte < 750 g/Mol, vorzugsweise von 18 bis 400 g/Mol besonders bevorzugt von 60 bis 300 g/Mol. Als Kettenverlängerer werden vorzugsweise Alkandiole mit 2 bis 12, vorzugsweise 2, 4 oder 6 Kohlenstoffatomen, z.B. Ethandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol sowie Polyoxyalkylenglykole verwendet. Geeignet sind auch verzweigtkettige und/oder ungesättigte Alkandiole mit üblicherweise nicht mehr als 12 Kohlenstoffatomen, wie z.B. 1,2-Propandiol, 2-Methyl-1,3-Propandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons oder Resorcins, z.B. 1,4-Di-(β-hydroxyethyl)-hydrochinon oder 1,3-(β-Hydroxyethyl)-resorcin, Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl- und N,N'-Dicyclohexyl-, (p- bzw. m-) -Phenylendiamin, N,N'-Dimethyl-, N,N'-Diethyl-, N,N'-Diisopropyl-, N,N'-Di-sec.-butyl-, N,N'-Dicyclohexyl-, -4,4'-diamino-diphenylmethan, N,N'-Di-sec.-butylbenzidin, Methylen-bis(4-amino-3-benzoesäuremethylester), 2,4-Chlor-4,4'-diamino-diphenylmethan, 2,4- und 2,6-Toluylendiamin.

Die Verbindungen der Komponente e) können in Form von Mischungen oder einzeln eingesetzt werden. Verwendbar sind auch Gemische aus Kettenverlängerern und Vernetzern.

Zur Einstellung der Härte der PUR-Elastomeren können die Aufbaukomponenten b), c), d) und e) in relativ breiten Mengenverhältnissen variiert werden, wobei die Härte mit zunehmendem Gehalt an Komponente e) in der Reaktionsmischung ansteigt.

Zum Erhalt einer gewünschten Härte des PUR-Elastomeren können die erforderlichen Mengen der Aufbaukomponenten b), c), d) und e) auf einfache Weise experimentell bestimmt werden. Vorteilhafterweise verwendet werden 1 bis 50 Gew.-Teile, vorzugsweise 2,5 bis 20 Gew.-Teile des Kettenverlängerers und/oder Vernetzers e), bezogen auf 100 Gew.-Teile der höhermolekularen Verbindungen b), c) und d) verwendet.

Als Komponente f) können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-A 26 24 527 und DE-A 26 24 528), 1,4-Diaza-bicyclo-[2,2,2]-octan, N-Methyl-N'-dimethylaminoethyl-piperazin, Bis-(dimethylaminoalkyl)-piperazine, N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, Bis-(dimethylaminopropyl)-amin, 1,2-Dimethylimidazol, 2-Methylimidazol, monocyclische und bicyclische Amidine, Bis-(dialkylamino)-alkylether, wie z.B. Bis(dimethylaminoethyl)ether, sowie Amidgruppen (vorzugsweise Formamidgruppen) aufweisende tertiäre Amine gemäß DE-A 25 23 633 und DE-A 27 32 292). Als Katalysatoren sind auch an sich bekannte Mannichbasen aus sekundären Aminen, wie Dimethylamin, und Aldehyden, vorzugsweise Formaldehyd, oder Ketone wie Aceton, Methylethylketon oder Cyclohexanon und Phenole, wie Phenol, Nonylphenol oder Bisphenol, geeignet. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren können ferner Amine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt.

Erfindungsgemäß können als Metallkatalysatoren g) auch organische Metallverbindungen des Zinns, Titans, Bismuts, insbesondere organische Zinnverbindungen, als zusätzliche Katalysatoren mitverwendet werden. Als organische Zinnverbindungen kommen neben schwefelhaltigen Verbindungen, wie Di-n-octyl-zinn-mercaptid, vorzugsweise Zinn(II)-salze von Carbonsäuren, wie Zinn(II)-acetat, Zinn(II)-octoat, Zinn(II)-ethylhexoat, Zinn(II)-laurat und Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Die Reaktionsmischung zur Herstellung der kompakten und zelligen PUR-Elastomeren kann gegebenenfalls mit Zusatzstoffen h) versehen werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole, Paraffinöle, Rizinusöl- bzw. Ricinolsäureester, Türkischrotöl, Erdnussöl und Zellregler wie Paraffine, Fettalkohole und Polydimethylsiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen b) und c) angewandt. Zugesetzt werden können auch Reaktionsverzögerer, ferner Pigmente oder Farbstoffe und an sich bekannte Flammschutzmittel, ferner Stabilisatoren gegen Alterungs- und Witterungseinflüsse, Weichmacher und fungistatisch und bakteriostatisch wirkende Substanzen.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München, 3. Auflage, 1993, S.118 bis 124 beschrieben.

Zur Veranschaulichung wird die Erfindung anhand der Figuren 1a bis 1f sowie 2 und 3 im Folgenden näher erläutert.

Es zeigen die Figuren 1a bis 1f die wesentlichen Verfahrensschritte, und die Figuren 2 und 3 exemplarisch zwei Verbundteile mit unterschiedlichem Aufbau.

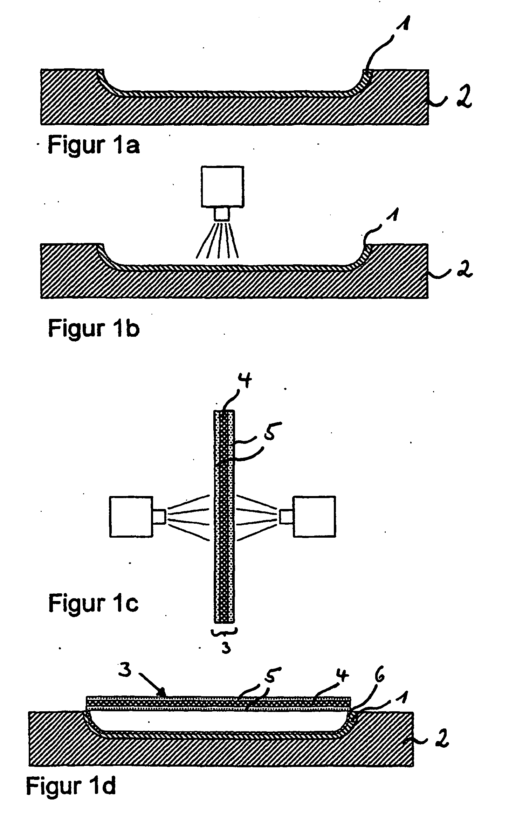

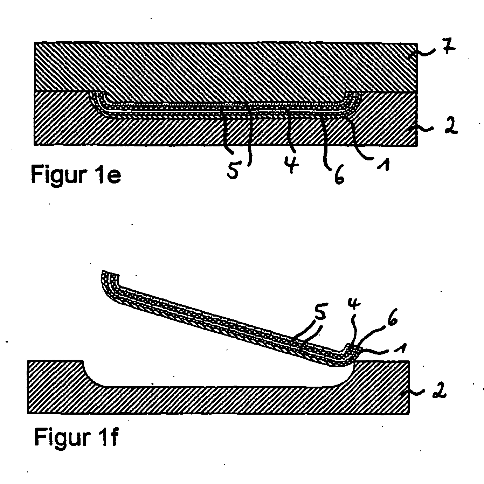

In Figur 1a wird die Deckfolie oder äußere Folie 1 in das Unterwerkzeug 2 eingelegt und mit Vakuum (nicht dargestellt) angesaugt. Anschließend wird, wie in Figur 1b dargestellt, die Zwischenschicht durch Sprühen aufgetragen. Parallel dazu oder zeitlich etwas versetzt kann dann die Trägerschicht vorbereitet werden. Figur 1c zeigt beispielhaft eine Trägerschicht 3 mit einem Wabenkern 4, welcher beidseitig mit Glasfasermatten 5 belegt ist, die mit Polyurethan-Binder besprüht sind bzw. werden. Der Polyurethan-Binder sorgt einerseits für den Verbund der Glasfasermatten mit dem Wabenkern 4 und andererseits auch für den Verbund mit der Zwischenschicht 6, die in Figur 1d dargestellt ist. Die Trägerschicht 3 wird dann auf die mit der äußeren Folie 1 verbundene Zwischenschicht 6 in der Form 2 eingelegt, wie in Figur 1d dargestellt ist. Anschließend wird die Werkzeugkavität mit dem Oberwerkzeug 7 geschlossen (Figur 1e), wodurch einerseits die Formgebung der Trägerschicht 3 und der Verbund der Trägerschicht 3 mit der Zwischenschicht 6 erreicht wird. Nach dem Aushärten kann das Formteil 8 dann, wie in Figur 1f dargestellt, entnommen werden.

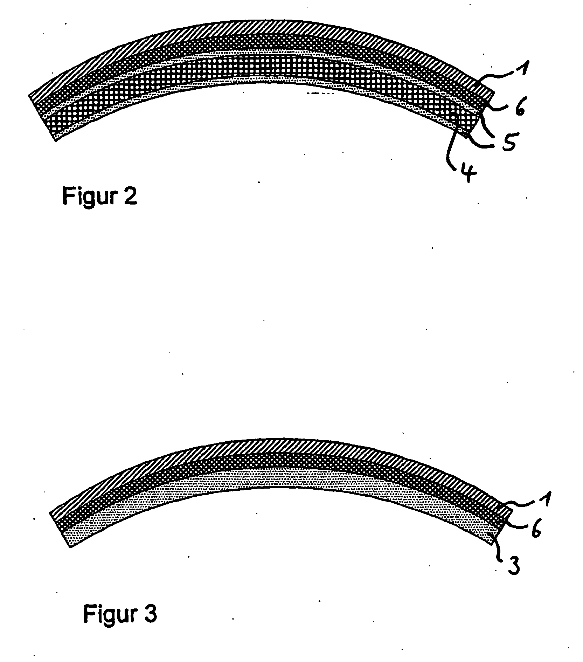

In Figur 2 ist der Aufbau eines solchen aus der Form entnommenen und um 180° gedrehten Verbundteiles 8 dargestellt, dessen Herstellung in den Figuren 1a bis 1f dargestellt ist. Den äußeren sichtbaren Abschluss des Verbundteiles bildet die äußere Folie 1. Dahinter befindet sich die Zwischenschicht 6 und darunter wiederum befindet sich die Trägerschicht 3, welche aus einem Wabenkern 4 besteht, der beidseitig mit Polyurethan-Binder getränkten Glasfasermatten 5 umgeben ist.

Figur 3 zeigt einen alternativen Aufbau eines Verbundteils 8, bei dem die Trägerschicht 3 nur aus einer glasfaserverstärkten Polyurethanmatrix ohne Wabenkern besteht. Dabei kann es sich wiederum um eine mit Polyurethan getränkte Glasfasermatte handeln oder aber um Schnittglasfasern, die erst beim Aufbringen des Polyurethan-Gemisches zugegeben werden. Das Verbundteil weist ebenfalls wiederum eine äußere Folie 1 und eine zwischen der äußeren Folie 1 und der Trägerschicht 3 angeordnete Zwischenschicht 6 auf.

## Patentansprüche

1. Verfahren zur Herstellung von faserverstärkten Verbundbauteilen, bei dem eine äußere Folie mit einer Schicht enthaltend faserverstärktes Polyurethan über eine Zwischenschicht verbunden wird, wobei
a) auf die äußere Folie, welche eine Dicke im Bereich von 0,2 mm bis 5 mm aufweist, zunächst eine elastische Zwischenschicht aufgebracht wird, welche eine Dicke von 0,3 mm bis 6 mm aufweist, wobei die elastische Zwischenschicht wenigstens ein Polyurethanelastomer enthält, und anschließend
b) auf die Rückseite der Zwischenschicht mindestens eine weitere Schicht aufgetragen wird, wobei mindestens eine Schicht enthaltend faserverstärktes Polyurethan aufgetragen wird, **dadurch gekennzeichnet, dass** die elastische Zwischenschicht einen Elastizitätsmodul von 0,5 MPa bis 50 MPa aufweist und das Polyurethanelastomer erhältlich ist durch Umsetzung von
a) organischen Di- und/oder Polyisocyanaten mit
b) mindestens einem Polyetherpolyol mit einem zahlenmittleren Molekulargewicht von 800 g/Mol bis 25 000 g/mol und mit einer mittleren Funktionalität von 2,4 bis 8, und
c) Polymerpolyolen mit Gehalten von 1 bis 50 Gew.-% an Füllstoffen bezogen auf das Polymerpolyol, und mit OH-Zahlen von 10 bis 149 und mittleren Funktionalitäten von 1,8 bis 8, und
d) in Gegenwart von Aminkatalysatoren und
e) Metallkatalysatoren.

2. Verfahren nach Anspruch 1, **dadurch gekennzeichnet, dass** die Zwischenschicht einen Kompressionsmodul von zwischen 500 MPa und 5000 MPa aufweist.

3. Verfahren nach einem der Ansprüche 1 bis 2, **dadurch gekennzeichnet, dass** die Zwischenschicht viskoelastische Eigenschaften besitzt.

4. Verfahren nach einem der Ansprüche 1 bis 3, **dadurch gekennzeichnet, dass** das Aufbringen der mindestens einen weiteren Schicht vor dem vollständigen Abbinden der Zwischenschicht erfolgt.

5. Verfahren nach einem der Ansprüche 1 bis 4, **dadurch gekennzeichnet, dass** die Zwischenschicht durch Sprühen aufgetragen wird.

6. Verfahren nach Anspruch 5, **dadurch gekennzeichnet, dass** der Sprühauftrag mit einer gleichmäßigen Masseverteilung mit weniger als + / - 10% Abweichung der Masse der Zwischenschicht bezogen auf Flächenelemente von 5 cm² erfolgt.

7. Verbundteil (8), enthaltend eine äußere Folie (1), eine Zwischenschicht (6) und mindestens eine weitere Schicht (3), wobei mindestens eine der weiteren Schichten faserverstärktes Polyurethan enthält, worin
1) die äußere Folie eine Dicke im Bereich von 0,2 mm bis 5 mm aufweist, und
2) die elastische Zwischenschicht eine Dicke von 0,3 mm bis 6 mm aufweist, wobei die elastische Zwischenschicht wenigstens ein Polyurethanelastomer enthält, **dadurch gekennzeichnet, dass** die elastische Zwischenschicht einen Elastizitätsmodul von 0,5 MPa bis 50 MPa aufweist und das Polyurethanelastomer erhältlich ist durch Umsetzung von
a) organischen Di- und/oder Polyisocyanaten mit
b) mindestens einem Polyetherpolyol mit einem zahlenmittleren Molekulargewicht von 800 g/Mol bis 25 000 g/mol und mit einer mittleren Funktionalität von 2,4 bis 8, und
c) Polymerpolyolen mit Gehalten von 1 bis 50 Gew.-% an Füllstoffen bezogen auf das Polymerpolyol, und mit OH-Zahlen von 10 bis 149 und mittleren Funktionalitäten von 1,8 bis 8, und
d) in Gegenwart von Aminkatalysatoren und
e) Metallkatalysatoren.

## Claims

1. Process for the production of fibre-reinforced composite components which comprises bonding an outer foil and a layer containing fibre-reinforced polyurethane together via an intermediate layer, wherein
a) the outer foil, which has a thickness in the range from 0.2 mm to 5 mm, initially has applied to it an elastic intermediate layer which has a thickness of 0.3 mm to 6 mm, wherein the elastic intermediate layer comprises at least a polyurethane elastomer, and subsequently
b) the reverse side of the intermediate layer has applied to it at least one further layer, wherein at least one layer comprising fibre-reinforced polyurethane is applied, **characterized in that** the elastic intermediate layer has a modulus of elasticity of 0.5 MPa to 50 MPa and the polyurethane elastomer is obtainable by reaction of
a) organic di- and/or polyisocyanates with
b) at least one polyether polyol with a number average molecular weight of 800 g/mol to 25 000 g/mol and with an average functionality of 2.4 to 8, and
c) polymer polyols with from 1 to 50 wt.% filler content, based on the polymer polyol, and with OH values of from 10 to 149 and average functionalities of from 1.8 to 8, and
d) in the presence of amine catalysts and
e) metal catalysts.

2. Process according to Claim 1, **characterized in that** the intermediate layer has a compressive modulus of between 500 MPa and 5000 MPa.

3. Process according to either of Claims 1 and 2, **characterized in that** the intermediate layer has viscoelastic properties.

4. Process according to any of Claims 1 to 3, **characterized in that** the applying of the at least one further layer takes place before complete setting of the intermediate layer.

5. Process according to any of Claims 1 to 4, **characterized in that** the intermediate layer is applied by spraying.

6. Process according to Claim 5, **characterized in that** the application by spraying is carried out with an even mass distribution with less than +/- 10% deviation in the mass of the intermediate layer based on area elements of 5 cm².

7. Composite part (8) comprising an outer foil (1), an intermediate layer (6) and at least one further layer (3), at least one of the further layers comprising fibre-reinforced polyurethane, wherein
1) the outer foil has a thickness in the range from 0.2 mm to 5 mm, and
2) the elastic intermediate layer has a thickness of 0.3 mm to 6 mm and comprises at least a polyurethane elastomer, **characterized in that** the elastic intermediate layer has a modulus of elasticity of 0.5 MPa to 50 MPa and the polyurethane elastomer is obtainable by reaction of
a) organic di- and/or polyisocyanates with
b) at least one polyether polyol with a number average molecular weight of 800 g/mol to 25 000 g/mol and with an average functionality of 2.4 to 8, and
c) polymer polyols with from 1 to 50 wt.% filler content, based on the polymer polyol, and with OH values of from 10 to 149 and average functionalities of from 1.8 to 8, and
d) in the presence of amine catalysts and
e) metal catalysts.

## Revendications

1. Procédé de fabrication d'éléments composites renforcés par des fibres, une feuille extérieure étant reliée avec une couche qui contient un polyuréthane renforcé par des fibres par le biais d'une couche intermédiaire, selon lequel
a) une couche intermédiaire élastique, qui présente une épaisseur de 0,3 mm à 6 mm, est tout d'abord appliquée sur la feuille extérieure, qui présente une épaisseur dans la plage allant de 0,2 mm à 5 mm, la couche intermédiaire élastique contenant au moins un élastomère de polyuréthane, puis
b) au moins une couche supplémentaire est appliquée sur le verso de la couche intermédiaire, au moins une couche contenant un polyuréthane renforcé par des fibres étant appliquée,
**caractérisé en ce que** la couche intermédiaire élastique présente un module d'élasticité de 0,5 MPa à 50 MPa et l'élastomère de polyuréthane peut être obtenu par réaction de
a) des di- et/ou polyisocyanates organiques avec
b) au moins un polyéther-polyol ayant un poids moléculaire moyen en nombre de 800 g/mol à 25 000 g/mol et une fonctionnalité moyenne de 2,4 à 8, et
c) des polymère-polyols ayant des teneurs de 1 à 50 % en poids en charges par rapport au polymère-polyol et des indices OH de 10 à 149 et des fonctionnalités moyennes de 1,8 à 8, et
d) en présence de catalyseurs aminés et
e) de catalyseurs métalliques.

2. Procédé selon la revendication 1, **caractérisé en ce que** la couche intermédiaire présente un module de compression compris entre 500 MPa et 5 000 MPa.

3. Procédé selon l'une quelconque des revendications 1 à 2, **caractérisé en ce que** la couche intermédiaire présente des propriétés viscoélastiques.

4. Procédé selon l'une quelconque des revendications 1 à 3, **caractérisé en ce que** l'application de la ou des couches supplémentaires a lieu avant le durcissement complet de la couche intermédiaire.

5. Procédé selon l'une quelconque des revendications 1 à 4, **caractérisé en ce que** la couche intermédiaire est appliquée par pulvérisation.

6. Procédé selon la revendication 5, **caractérisé en ce que** l'application par pulvérisation a lieu avec une distribution de masse uniforme avec une déviation inférieure à ± 10% de la masse de la couche intermédiaire par rapport à des éléments de surface de 5 cm².

7. Pièce composite (8), contenant une feuille extérieure (1), une couche intermédiaire (6) et au moins une couche supplémentaire (3), au moins une des couches supplémentaires contenant un polyuréthane renforcé par des fibres,
1) la feuille extérieure présentant une épaisseur dans la plage allant de 0,2 mm à 5 mm,
2) la couche intermédiaire élastique présentant une épaisseur de 0,3 mm à 6 mm, la couche intermédiaire élastique contenant au moins un élastomère de polyuréthane,
**caractérisée en ce que** la couche intermédiaire élastique présente un module d'élasticité de 0,5 MPa à 50 MPa et l'élastomère de polyuréthane peut être obtenu par réaction de
a) des di- et/ou polyisocyanates organiques avec
b) au moins un polyéther-polyol ayant un poids moléculaire moyen en nombre de 800 g/mol à 25 000 g/mol et une fonctionnalité moyenne de 2,4 à 8, et
c) des polymère-polyols ayant des teneurs de 1 à 50 % en poids en charges par rapport au polymère-polyol et des indices OH de 10 à 149 et des fonctionnalités moyennes de 1,8 à 8, et
d) en présence de catalyseurs aminés et
e) de catalyseurs métalliques.
